# EUROPÄISCHE PATENTSCHRIFT

(11) **EP 0 922 629 B1**
(45) Veröffentlichungstag und Bekanntmachung des Hinweises auf die Patenterteilung: **07.05.2003**
(21) Anmeldenummer: 98123673.0
(22) Anmeldetag: 11.12.1998
(51) Int. Cl.: B62D 55/27

(54) **Raupensteg für Laufketten von Raupenfahrzeugen insbesondere für Pisten- oder Loipenspurgeräte**
Lug for track of tracked vehicle, particularly for piste preparing or snow-track making machines.
Crampon pour chenille de véhicule à chenille, particulièrement pour machines pour la préparation ou la réfection de pistes de ski

(30) Priorität: 13.12.1997 DE 19755581
(43) Veröffentlichungstag der Anmeldung: 16.06.1999
(73) Patentinhaber: Hall, Hans, 88250 Weingarten (DE); Hall, Werner, 88250 Weingarten (DE)
(72) Erfinder: Hall, Hans, 88250 Weingarten (DE)
(74) Vertreter: Patentanwälte Eisele, Otten & Roth

(56) Entgegenhaltungen:
- DE-U- 29 602 940

## Beschreibung

Die Erfindung betrifft einen Raupensteg für Laufketten von Raupenfahrzeugen, insbesondere für Pistenfahrzeuge oder Loipenspurgeräte nach dem Oberbegriff des Anspruchs 1.

### Stand der Technik:

Raupenstege nach dem Oberbegriff des Anspruchs 1 sind in unterschiedlichen Ausführungsformen bekannt geworden. Offenbart wurden Raupenstege, die vollständig aus Stahl oder Aluminium bestehen und solche, die einen Grundkörper aus Aluminium aufweisen, an dem eine verschleißfeste Schneide durch Verschrauben oder beispielsweise bei einem Strangpreßvorgang eines Aluminiumprofil befestigt wird (vergleiche hierzu die Schweizer Patentschrift CH 644 558 bzw. die europäische Patentschrift EP 0 381 642 B1).

Ein Stahlsteg hat den Nachteil, daß er zu schwer ist. Ein Aluminiumsteg hingegen nutzt sich beim Einsatz unter rauhen Betriebsbedingungen sehr stark ab, was bis zum Bruch des Steges führen kann. Aluminiumstege mit eingearbeiteten oder eingeschraubten Stahleinlagen sind in bekannten Ausführungsformen teuer in der Herstellung und im Austausch von abgenutzten Baueinheiten.

In der europäischen Patentschrift EP 0 414 208 B1 wird ein Stahlraupensteg beschrieben, bei dem sonst übliche Fertigungsprobleme bei Stegen aus Stahl vermieden werden. Bei dieser Ausführungsform wird zugunsten einer hohen Verschleißfestigkeit und einem einfachen Aufbau ein im Vergleich zu Aluminiumstegen höheres Gewicht in Kauf genommen. Hierzu weist der Stahlsteg im Querschnitt einen U-Bügel mit zwei U-Schenkeln und dazwischen einen Verbindungssteg auf, von denen der erste U-Schenkel als Verlängerung einen über einen Knick nach innen geführten Verbindungsschenkel sowie nach einem weiteren Knick einen sich daran anschließenden, in etwa zu den U-Schenkeln paralleles Schwert besitzt. Die Ausführungsform zeichnet sich dadurch aus, daß der zweite U-Schenkel auch nach innen geknickt ist und mit dem ersten Verbindungsschenkel verschweißt ist, so daß sich im Querschnitt ein hausähnlicher Hohlraum bildet, über den der erste U-Schenkel übersteht. Neben dem hohen Gewicht dieser Ausführungsform ist ein weiterer Nachteil, daß bei Abnutzung der Schneide oder des Schwerts des Steges gegebenenfalls der komplette Steg ersetzt werden muß, was zu hohen Betriebskosten führt. Im weiteren ist der Steg für harten Untergrund ausgelegt und für weniger anspruchsvolle Einsatzzwecke überdimensioniert.

In dem gattungsbildenden deutschen Gebrauchsmuster DE 296 02 940 U1 werden Kettenstegprofile, unter anderem auch mit einer eingesetzten Schneide, für Laufketten von Raupenfahrzeugen offenbart, die einen Stegkörper aufweisen, der eine im Querschnitt im wesentlichen U-förmige Basis mit zwei Schenkeln und wenigstens einem dazwischen angeordneten Verbindungssteg besitzt, wobei die U-Schenkel aufeinander zulaufen und in einem Endstück des Stegkörpers enden. Zwischen jedem U-Schenkel und dem Verbindungssteg ist fachwerkartig ein Abstützsteg angeordnet. Die Auflage auf einem Laufband der Kette wird dabei durch eine weitere Stegverbindung unterhalb des fachwerkartigen Aufbaus bereitgestellt. Ein derartiges Kettenstegprofil soll dem Raupensteg eine hohe Steifigkeit bei geringem Gewicht pro Längeneinheit verleihen, ist jedoch vergleichsweise aufwendig in der Herstellung.

### Aufgabe und Vorteil der Erfindung:

Der Erfindung liegt die Aufgabe zugrunde, unter Vermeidung der Nachteile des Standes der Technik einen Raupensteg vorzuschlagen, der für unterschiedliche Einsatzzwecke individuell anpaßbar ist und sich mit vergleichsweise geringem Kostenaufwand herstellen läßt.

Diese Aufgabe wird durch die Merkmale des Anspruchs 1 gelöst.

In den Unteransprüchen sind vorteilhafte und zweckmäßige Weiterbildungen des erfindungsgemäßen Raupenstegs angegeben.

Die Erfindung geht von einem Raupensteg für Laufketten von Raupenfahrzeugen, insbesondere für Pistenfahrzeuge oder Loipenspurgeräte aus, der quer zur Laufrichtung an parallel zueinander liegenden in Fahrtrichtung ausgerichteten Bändern befestigbar ist und eine Schneide sowie einen länglichen Grundkörper umfaßt, der in Richtung Bänder eine flächige Auflage aufweist und im Querschnitt zwei Seitenschenkeln mit einem dazwischen angeordneten Verbindungssteg umfaßt. Dabei nähert sich wenigstens ein Seitenschenkel dem anderen derart an, daß zwischen den Seitenschenkeln die Schneide einsetzbar ist. Der Kern der Erfindung liegt nun darin, dass die Schneide durchgehend bis zum Verbindungssteg verläuft. Durch diese Maßnahme wird eine vergleichsweise hohe Belastbarkeit der Schneide und eine große Stabilität des gesamten Raupensteges erzielt. Weiterhin werden Scherkräfte an der Verbindungsstelle von Schneide und Seitenschenkel stark reduziert oder sogar ganz vermieden. Durch den Aufbau können außerdem der Grundkörper und die einzusetzende Schneide oder das einzusetzende Schwert aus unterschiedlichen Materialien hergestellt werden. Beispielsweise kann der Grundkörper in Form eines einstückigen Profils aus einem leichten Metall, wie z. B. Aluminium oder sogar aus kunststof faserverstärktem Kunstharz bestehen. Dagegen wird die Schneide vorzugsweise aus einem verschleißfesten Material, wie z. B. Vergütungsstahl angefertigt. Durch die Art der Schneidenaufnahme können in einfacher Weise unterschiedliche Schneidenstärken eingesetzt werden, so daß der Raupensteg individuell an den Einsatzzweck angepaßt werden kann. Das heißt, die Schneidenbreite und das Schneidenmaterial läßt sich auf den Fahruntergrund und auf die Aggressivität, wie der Raupensteg in den Fahruntergrund eindringen soll, abstimmen. Im Gegensatz zu Ausführungsformen, bei denen die Schneide in eine Nut eines Raupensteggrundkörpers eingesetzt wird, also auch der Einsatz von unterschiedlichen Materialien und in einem begrenzten Umfang auch unterschiedliche Schneidenstärken möglich sind, ist bei der erfindungsgemäßen Art der Aufnahme immer gewährleistet, daß die eingesetzte, befestigte Schneide ohne Spiel satt zwischen den Seitenschenkeln sitzt. Denn die Seitenschenkel können sich beim Befestigen der Schneide gegebenenfalls noch weiter annähern oder voneinander entfernen und an unterschiedliche Schneidenstärken anpassen, was bei den seitlichen Wänden einer Nut nicht möglich ist.

Bei einer bevorzugten Ausgestaltung der Erfindung ist nur ein einziger Verbindungssteg vorgesehen, der dann gleichzeitig als flächige Auflage des Raupenstegs auf den Bändern der Laufkette dient. Weiterhin ist es vorteilhaft, wenn der jeweils im Abstand parallel verlaufende Abschnitt der Seitenschenkel im wesentlichen senkrecht zum Verbindungssteg ausgerichtet ist. Auf diese Weise kann eine einfache und zweckmäßige Ausgestaltung des Grundkörpers des Raupenstegs erzielt werden.

Bei einer besonders vorteilhaften Ausführungsform geht der wenigstens eine Seitenschenkel nach der Annäherung in einen Abschnitt über, in dem er derart mit Abstand im wesentlichen parallel zum anderen Schenkel verläuft, daß zwischen den Schenkeln eine Schneide einsetzbar ist. Das heißt, der wenigstens eine Schenkel nähert sich dem anderen Schenkel bis zu dem Abstand, in dem sie dann im wesentlichen parallel verlaufen, ohne sich dabei zu berühren. Bei durch Geradenstücke definierten Querschnitten wird ein Übergang in den parallelen Abschnitt immer durch einen Knick erfolgen. Bei kontinuierlichen Querschnittsformen muß dies jedoch nicht der Fall sein. Durch diese Maßnahmen kann in besonders einfacher weise eine Schraub-, Niet- oder Toxverbindung im Bereich der parallelen Abschnitte angebracht werden.

Um keine Unterscheidung zwischen linken und rechten Raupenstegen einer Laufkette vornehmen zu müssen, wird im weiteren vorgeschlagen, den Querschnitt des Grundkörpers symmetrisch auszuführen. In diesem Fall nähern sich beide Seitenschenkel in gleicher Weise an und gehen nach gegebenenfalls einem Knick in einen im wesentlichen senkrechten Abschnitt über und verlaufen dort so mit Abstand parallel zueinander, daß eine Schneide eingesetzt werden kann. Zum Beispiel können gerade verlaufende Seitenschenkel nach innen geneigt sein und nach einem Knick in den senkrechten Abschnitt übergehen. Bevorzugt ist es auch, wenn die Seitenschenkel zunächst senkrecht vom Verbindungssteg nach oben verlaufen, also eine Art "U-Form" ausbilden, nach einem Knick sich nach innen neigen und nach einem weiteren Knick wiederum in einen zum Verbindungssteg senkrechten Abschnitt übergehen, in dem die Schenkel mit Abstand parallel zueinander verlaufen, so daß dazwischen eine Schneide einsetzbar ist.

Bevorzugte Befestigungsmöglichkeiten der Schneide im Bereich der parallel laufenden Abschnitte sind Nieten, Schweißen, Toxen, Schrauben und/oder Kleben.

Im weiteren ist es bevorzugt, wenn die Schneide im Bereich des Verbindungssteges zusätzlich gehaltert ist.

Außerdem ist es vorteilhaft, wenn die Halterung durch eine Längsnut im Verbindungssteg erfolgt, in der die Schneide wenigstens teilweise geführt ist. Dies stellt eine besonders einfache Realisierungsmöglichkeit dar. In einer ebenfalls günstigen Ausführungsform erfolgt die Halterung durch eine Schraubenverbindung, die im Bereich des Verbindungssteges in einem verbreiterten Abschnitt der Schneide angeordnet ist.

Die Schraubenverbindung kann auch mit einer Halterung mittels Nut kombiniert werden.

Um hohe Festigkeitswerte des Raupensteges bei reduzierter Wandstärke des Grundkörpers zu erzielen, wird im weiteren vorgeschlagen, daß der hohlprofilartige Grundkörper mit Aluminiumschaum gefüllt ist.

Um eine einfache Anbringung des Raupensteges an den Laufbändern zu erzielen, wird vorgeschlagen, daß im Bereich des Verbindungssteges Haltemittel zur Befestigung des Raupensteges vorgesehen sind. Dabei können die Haltemittel entweder Gewindebohrungen direkt im Verbindungssteg umfassen oder eine in den Grundkörper eingelegte Gewindeleiste beinhalten bzw. gleichzeitig die Haltemittel des Verbindungssteges darstellen, wobei in den zwei letztgenannten Fällen im Verbindungssteg entsprechende Öffnungen zum Einführen von Schrauben vorgesehen sind.

### Zeichnungen:

Vier Ausführungsbeispiele der Erfindung sind in den Zeichnungen dargestellt und in der nachfolgenden Beschreibung unter Angabe weiterer Vorteile und Einzelheiten näher erläutert.

Es zeigen
- Fig. 1: ein erstes Ausführungsbeispiel eines erfindungsgemäßen Raupensteges im Querschnitt mit eingenieteter Schneide,
- Fig. 2: ein zweites Ausführungsbeispiel eines Raupensteges im Querschnitt mit angeschweißter Schneide,
- Fig. 3: ein Raupensteggrundkörper im Querschnitt für einen geschweißten Raupensteg gemäß Fig. 2,
- Fig. 4: ein drittes Ausführungsbeispiel eines erfindungsgemäßen Raupensteges im Querschnitt mit durchgehend verlaufender Schneide,
- Fig. 5: die zum Ausführungsbeispiel gemäß Fig. 4 gehörende Schneide in der Vorderansicht,
- Fig. 6: ein viertes Ausführungsbeispiel eines erfindungsgemäßen Raupensteges in der Querschnittsansicht mit durchgehender Schneide und Haltemittel im Fußbereich der Schneide und
- Fig. 7a + b: die zum Ausführungsbespiel gemäß Fig. 6 gehörende Schneide in der Vorder- und Seitenansicht.

### Beschreibung der Ausführungsbeispiele:

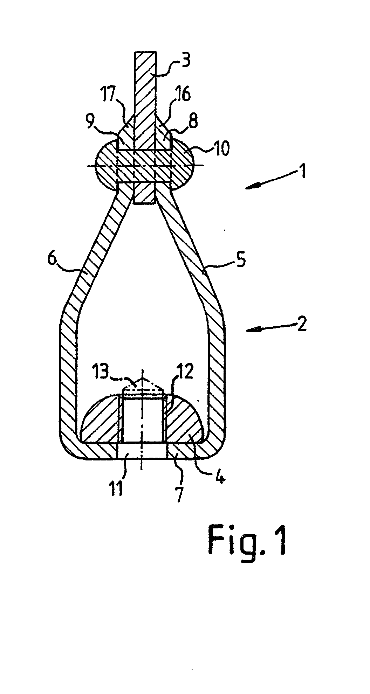

Der erfindungsgemäße Raupensteg 1 nach Fig. 1 umfaßt einen länglichen Grundkörper 2, eine Scheide 3 sowie eine Schraubenleiste 4. Der Grundkörper 2 besteht im wesentlichen aus zwei Seitenschenkeln 5, 6 mit einem dazwischen angeordneten Verbindungssteg 7. Die Seitenschenkel 5, 6 sind zunächst senkrecht zu Verbindungssteg 7 ausgerichtet und bilden im Querschnitt in diesem Bereich einen U-Bügel. Über einen Knick werden im weiteren Verlauf die Seitenschenkel nach innen geführt und gehen über einen weiteren Knick in einen Abschnitt 8, 9 über, der im vorliegenden Ausführungsbeispiel im wesentlichen senkrecht zum Verbindungssteg 7 ausgerichtet ist und in dem die Seitenschenkel derart mit Abstand parallel zueinander verlaufen, daß zwischen die Schenkel die Schneide 3 eingesetzt werden kann. Zur sicheren Befestigung der Schneide 3 kann, wie im vorliegenden Ausführungsbeispiel, eine Nietverbindung vorgesehen werden. Hierzu weisen die Seitenschenkel 5, 7 im parallel laufenden Abschnitt 8, 9 sowie die Schneide 3 geeignete Bohrungen auf.

Zur Befestigung des kompletten Raupensteges an den Bändern einer Laufkette (nicht gezeigt) dient die Schraubenleiste 4. Hierzu sind im Verbindungssteg 7 Ausnehmungen oder Bohrungen 11 angebracht, um in die Gewindebohrungen 12 der Schraubenleiste entsprechende Schraubengewinde 13 einbringen zu können.

Für die weiteren Ausführungsbeispiele werden gleiche Bauteile wie in Fig. 1 mit gleichen Bezugszeichen versehen.

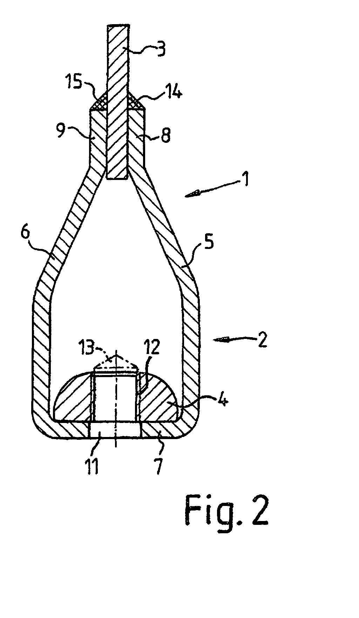

Die Ausführungsform von Fig. 2 unterscheidet sich von der gemäß Fig. 1 dadurch, daß die Schneide 3 nicht durch eine Nietverbindung 10, sondern durch zwei Schweißnähte 14, 15 am Grundkörper 2 befestigt ist. Die Schweißnähte sind am oberen Ende der mit Abstand parallel verlaufenden Abschnitte 8, 9 angeordnet. Hierzu laufen die Abschnitte 8, 9 nicht wie in Fig. 1 in einer Schräge 16, 17 aus, um so einen gleichmäßigen Übergang zur Schneide 3 zu schaffen, sondern bilden an der Schneide 3 einen Absatz, der sich zur Aufnahme der Schweißnähte 14, 15 eignet, die den Absatz ausfüllen und auf diese Weise den gewünschten gleichmäßigen Übergang zur Schneide 3 schaffen.

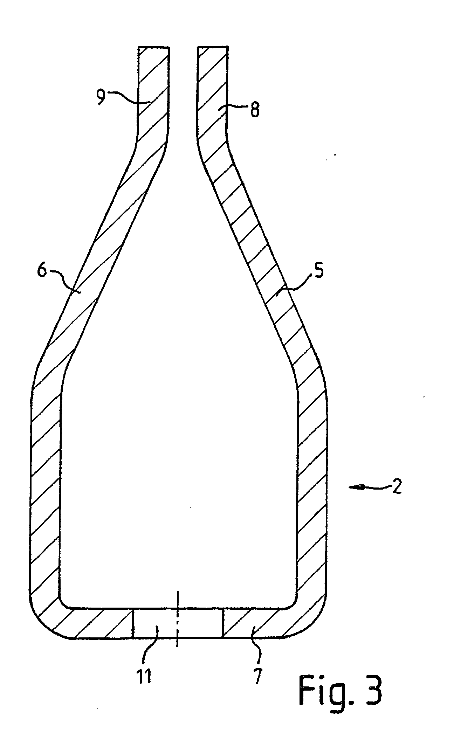

In Fig. 3 ist der Grundkörper gemäß Fig. 2 zum Anschweißen der Schneide 3 separat dargestellt.

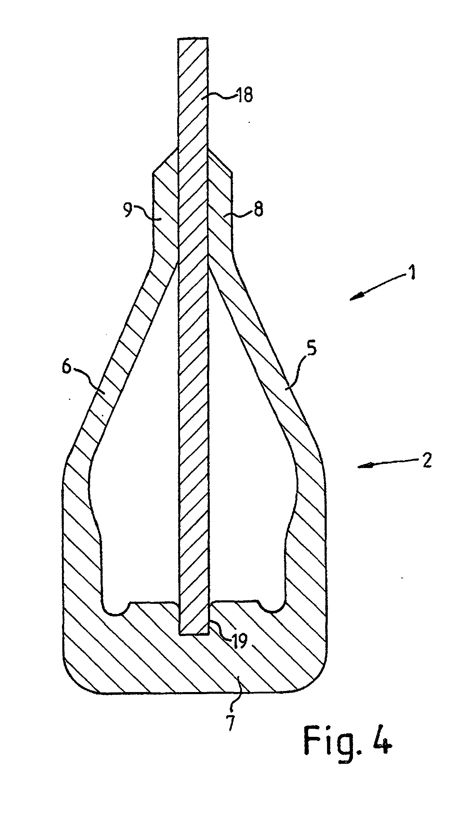

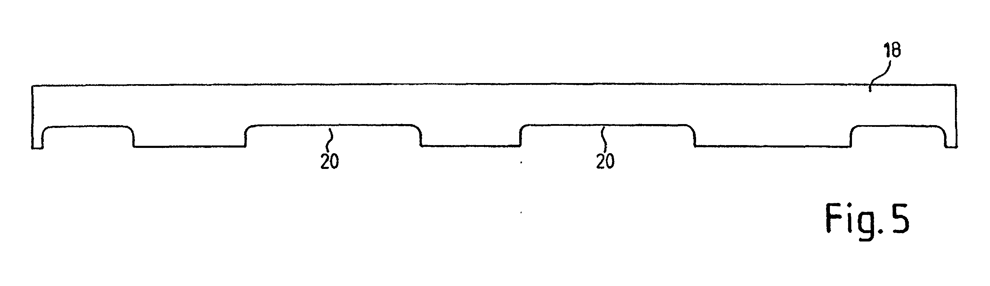

In Fig. 4 ist eine Ausführungsform abgebildet, bei der eine Schneide 18 durchgehend im Grundkörper 2 bis zum Verbindungssteg 7 verläuft. Die Schneide 18 ist beispielsweise am Ende der parallel verlaufenden Abschnitte 8, 9 der Seitenschenkel 5, 6 angeschweißt. Zur Ausbildung der Halterung der Schneide 18 im Bereich des Verbindungssteges 7 ist dieser in einer größeren Materialstärke ausgeführt und weist eine Nut 19 auf, in der die Schneide 18 geführt ist und diese daran hindert, seitlich oder nach unten auszuweichen. Neben einer Verbesserung der Steifigkeit des gesamten Raupensteges werden durch eine derartige Anordnung vor allem Scherkräfte in Richtung Schneide 18 an der Verbindungsstelle von Schneide und Grundkörper im Bereich der parallel verlaufenden Abschnitte 8, 9 abgefangen. Damit wird die Dauerfestigkeit der Grundkörper/Schneideverbindung und damit die Zuverlässigkeit des Raupensteges erhöht. Wie in Fig. 5 ersichtlich ist es ausreichend, wenn die Schneide 8, 10 nur teilweise in der Nut 19 geführt wird und im übrigen gemäß den Aussparungen 20 zurückgesetzt ist. Auf diese Weise wird Material eingespart und somit das Gesamtgewicht des Raupensteges reduziert.

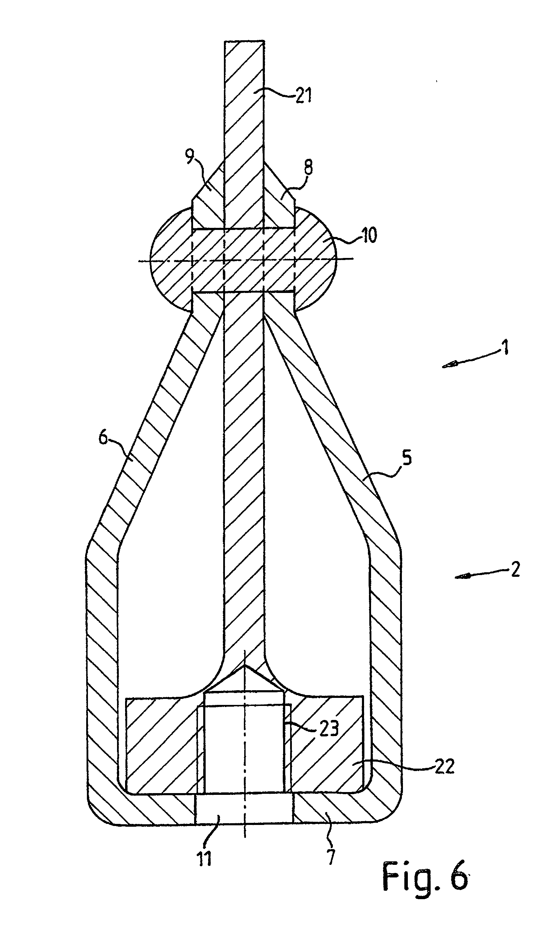

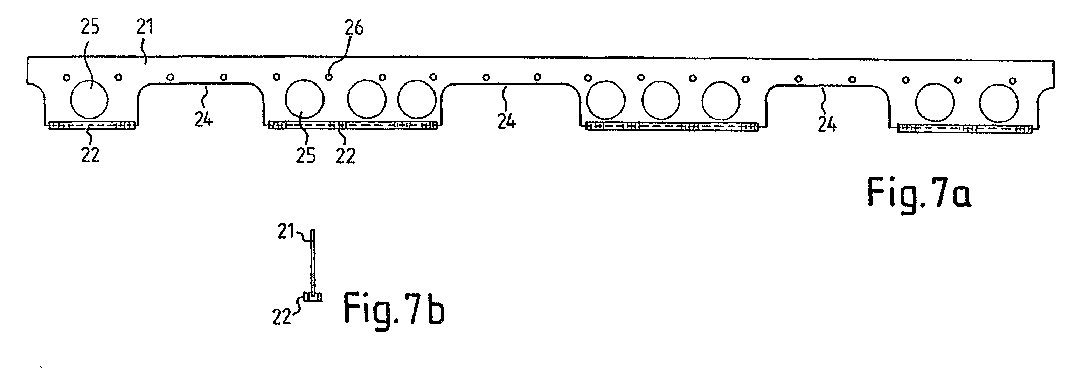

Ein weiteres Ausführungsbeispiel ist in Fig. 6 abgebildet. Auch bei dieser Ausführungsform verläuft eine Schneide 21 durchgehend bis zum Verbindungssteg 7. Die Befestigung der Schneide 21 ist in gleicher Weise wie im Ausführungsbeispiel nach Fig. 1 in Form einer Nietverbindung 10 ausgeführt. Ebenso kann der gleiche Grundkörper 2 wie im ersten Ausführungsbeispiel eingesetzt werden. Im Gegensatz zur Ausführungsform nach Fig. 4 endet die Schneide 21 jedoch nicht in einer Nut, sondern geht in ein Fußteil 22 über, das auf dem Verbindungssteg 7 aufliegt. Im Fußteil 22 können Gewindebohrungen 23 vorgesehen werden, mittels derer die Schneide 21 zusammen mit dem kompletten Raupensteg befestigt werden kann. Hierzu sind im Verbindungssteg 7 des Grundkörpers 2 Bohrungen oder Ausnehmungen 11 vorgesehen, die es erlauben, z. B. ein Schraubengewinde (nicht gezeigt) in die Gewindebohrung 23 einzubringen. Eine Schneide 21 ist in der Vorder- und Seitenansicht in Fig. 7a und b dargestellt. Wie in der Ausführungsform gemäß Fig. 5 sind auch in diesem Fall Aussparungen 24 vorhanden, die zu einer Gewichtseinsparung führen. Zusätzlich sind in der Schneide 21 weitere im vorliegenden Fall kreisrunde Ausnehmungen 25 vorgesehen. Auch hierdurch kann bei ausreichender Festigkeit der Schneide Gewicht eingespart werden. In Fig. 7a sind darüber hinaus Bohrungen 26 für die Nietverbindung 10 zu sehen.

In Abhängigkeit vom verwendeten Material kann der Grundkörper als Strangpreßprofil (vorzugsweise bei Aluminium) durch ein Walzverfahren oder über einen Biegevorgang (vorzugsweise bei Stahl) hergestellt werden. In einer besonders leichten Bauweise besteht der Grundkörper 2 aus Kunststoff, vorzugsweise aus faserverstärkten Kunstharz. Nach der Herstellung des Grundkörpers ist es nicht erforderlich, daß die im montierten Zustand parallel verlaufenden Abschnitte 8, 9 bereits diese Form aufweisen, da die Seitenschenkel 5, 6 gegebenenfalls sogar im elastischen Bereich in ihrer Position verändert werden können. Durch die erfindungsgemäße Ausführung des Grundkörpers ist es daher möglich, daß in einfacher Weise unterschiedliche Stärken für die Schneiden 3, 18, 21 verwendet werden können, ohne dabei den Grundkörper verändern zu müssen. Denn für den Fall, daß die Abschnitte 8, 9 bei geändeter Schneidenstärke nicht die gewünschte Parallelität vor der Befestigung der Schneide aufweisen, kann durch die Verbindung von Schneide und Grundkörper (mittels Nieten, Toxen, Schrauben, Schweißen usw.) aufgrund der Nachgiebigkeit der Seitenschenkel und ebenso der dazugehörigen Abschnitte 8, 9 ein Ausrichtungsfehler ohne Nachteil im Hinblick auf die Stabilität des Raupensteges ausgeglichen werden.

Somit kann mit dem erfindungsgemäßen Raupensteg eine enorme Flexibilität bezüglich der Materialauswahl und der Anpassung an unterschiedliche Einsatzzwecke erreicht werden.
- 1: Raupensteg
- 2: Grundkörper
- 3: Scheide
- 4: Schraubenleiste
- 5: Seitenschenkel
- 6: Seitenschenkel
- 7: Verbindungssteg
- 8: paralleler Abschnitt
- 9: paralleler Abschnitt
- 10: Nietverbindung
- 11: Ausnehmung
- 12: Gewindebohrung
- 13: Schraubengewinde
- 14: Schweißnaht
- 15: Schweißnaht
- 16: Schräge
- 17: Schräge
- 18: Schneide
- 19: Nut
- 20: Aussparung
- 21: Schneide
- 22: Fußteil
- 23: Gewindebohrung
- 24: Aussparung
- 25: Ausnehmung
- 26: Bohrung

## Patentansprüche

1. Raupensteg (1) für Laufketten für Raupenfahrzeuge, insbesondere für Pistenfahrzeuge oder Loipenspurgeräte, der quer zur Laufrichtung an parallel zueinander liegenden in Fahrtrichtung ausgerichteten Bändern befestigbar ist und eine Schneide (3, 18, 21) sowie einen länglichen Grundkörper (2) umfaßt, der in Richtung Bänder eine flächige Auflage aufweist und im Querschnitt zwei Seitenschenkel (5, 6) mit einem dazwischen angeordneten Verbindungssteg (7) umfaßt, wobei wenigstens ein Seitenschenkel sich dem andern derart annähert, daß zwischen den Schenkeln die Schneide (3, 18, 21) einsetzbar ist, **dadurch gekennzeichnet, daß** die Schneide (3, 18, 21) durchgehend bis zum Verbindungssteg (7) verläuft.

2. Raupensteg nach Anspruch 1, **dadurch gekennzeichnet, daß** nur ein einziger Verbindungssteg (7) vorgesehen ist, der gleichzeitig als flächige Auflage auf den Bändern der Laufkette dient.

3. Raupensteg nach Anspruch 1 oder 2 **dadurch gekennzeichnet, daß** der wenigstens eine Seitenschenkel nach der Annäherung in einen Abschnitt (8, 9) übergeht, in dem der Schenkel derart mit Abstand im wesentlichen parallel zum anderen Schenkel verläuft, daß zwischen den Schenkeln eine Schneide einsetzbar ist.

4. Raupensteg nach Anspruch 3, **dadurch gekennzeichnet, daß** der jeweils mit Abstand parallel verlaufende Abschnitt (8, 9) der Seitenschenkel (5, 6) im wesentlichen senkrecht zum Verbindungssteg (7) ausgerichtet ist.

5. Raupensteg nach Anspruch 3 oder 4, **dadurch gekennzeichnet, daß** beide Seitenschenkel (5, 6) über wenigstens einen Knick in einem zum Verbindungssteg im wesentlichen senkrechten Abschnitt (8, 9) übergehen und in diesem Bereich derart mit Abstand parallel zueinander verlaufen, daß zwischen den Schenkeln eine Schneide (3, 18, 21) einsetzbar ist.

6. Raupensteg nach Anspruch 3 oder 4, **dadurch gekennzeichnet, daß** im Bereich des Verbindungssteges (7) die Seitenschenkel (5, 6) im Querschnitt U-förmig angeordnet sind und wenigstens ein Seitenschenkel über einen ersten Knick nach innen geführt und über einen zweiten Knick in einem zum Verbindungssteg im wesentlichen senkrechten Abschnitt (8, 9) übergeht und in diesem Bereich derart mit Abstand parallel zum anderen Schenkel verläuft, daß zwischen den Schenkeln eine Schneide (3, 18, 21) einsetzbar ist.

7. Raupensteg nach einem der Ansprüche 3 bis 6, **dadurch gekennzeichnet, daß** die Schneide (3, 18, 21) im Bereich der parallel verlaufenden Abschnitte durch Nieten, Schweißen, Toxen, Schrauben und/oder Kleben fest eingesetzt ist.

8. Raupensteg nach einem der Ansprüche 2 bis 7, **dadurch gekennzeichnet, daß** die Schneide (18, 21) im Bereich des Verbindungssteges (7) über eine Halterung befestigt ist.

9. Raupensteg nach Anspruch 8, **dadurch gekennzeichnet, daß** die Halterung durch eine Längsnut (19) im Verbindungssteg (7) erfolgt, in der die Schneide (18) wenigstens teilweise geführt ist.

10. Raupensteg nach einem der Ansprüche 8 oder 9, **dadurch gekennzeichnet, daß** die Halterung durch eine Schraubenverbindung (12, 13) erfolgt, die im Bereich des Verbindungssteges (7) in einem vorbereiteten Abschnitt (22) der Schneide (21) angeordnet ist.

11. Raupensteg nach einem der vorhergehenden Ansprüche, **dadurch gekennzeichnet, daß** der hohlprofilartige Grundkörper mit Aluminiumschaum gefüllt ist.

12. Raupensteg nach einem der vorhergehenden Ansprüche, **dadurch gekennzeichnet, daß** im Bereich des Verbindungsstegs Haltemittel zur Befestigung des Raupenstegs vorgesehen sind.

13. Raupensteg nach Anspruch 12, **dadurch gekennzeichnet, daß** die Haltemittel eine in den Grundkörper eingelegte Gewindeleiste (4) umfassen, wobei im Verbindungssteg entsprechende Öffnungen (11) zum Einführen eines Schraubengewindes (13) vorgesehen sind.

14. Raupensteg nach Anspruch 12, **dadurch gekennzeichnet, daß** die Haltemittel Gewindebohrungen im Verbindungssteg (7) umfassen.

15. Raupensteg nach einem der Ansprüche 8 bis 13, **dadurch gekennzeichnet, daß** die Halterung für die Schneide (21) gleichzeitig als Haltemittel für den Raupensteg dient.

## Claims

1. Crawler web (1) for crawlers for crawler vehicles, in particular for piste preparing or snow-track making machines, which can be fastened to bands oriented parallel to one another in the direction of travel, transversely to the running direction, and comprises a cutting edge (3, 18, 21) and an elongated basic body (2) which, in the direction of the bands, comprises a flat support and in cross-section two side legs (5, 6) with a connecting web (7) arranged therebetween, wherein at least one side leg approaches the other in such a way that the cutting edge (3, 18, 21) can be inserted between the legs, **characterised in that** the cutting edge (3, 18, 21) extends continuously up to the connecting web (7).

2. Crawler web according to claim 1, **characterised in that** only a single connecting web (7) is provided which is simultaneously used as a flat support on the bands of the crawler.

3. Crawler web according to claim 1 or 2, **characterised in that** after the approach the at least one side leg passes into a portion (8, 9) in which the leg extends substantially parallel to the other leg with a spacing such that a cutting edge can be inserted between the legs.

4. Crawler web according to claim 3, **characterised in that** the portion (8, 9) of the side legs (5, 6) extending parallel with a spacing in each case is oriented substantially perpendicularly to the connecting web (7).

5. Crawler web according to claim 3 or 4, **characterised in that** the two side legs (5, 6) pass via at least one bend into a portion (8, 9) substantially perpendicular to the connecting web and extend parallel to one another in this region with spacing such that a cutting edge (3, 18, 21) can be inserted between the legs.

6. Crawler web according to claim 3 or 4, **characterised in that** the side legs (5, 6) are arranged so as to be U-shaped in cross-section in the region of the connecting web (7) and at least one side leg is guided inwardly via a first bend and via a second bend passes into a portion (8, 9) substantially perpendicular to the connecting web and extends in this region parallel to the other leg with spacing such that a cutting edge (3, 18, 21) can be inserted between the legs.

7. Crawler web according to any of claims 3 to 6, **characterised in that** the cutting edge (3, 18, 21) is firmly inserted in the region of the portions extending parallel by riveting, welding, Tox clinching, screwing and/or gluing.

8. Crawler web according to any of claims 2 to 7, **characterised in that** the cutting edge (18, 21) is fastened via a mounting in the region of the connecting web (7).

9. Crawler web according to claim 8, **characterised in that** the mounting is provided by a longitudinal groove (19) in the connecting web (7), in which groove the cutting edge (18) is at least partially guided.

10. Crawler web according to either of claims 8 or 9, **characterised in that** the mounting is provided by a screw connection (12, 13) arranged in the region of the connecting web (7) in a preprepared portion (22) of the cutting edge (21).

11. Crawler web according to any of the preceding claims, **characterised in that** the hollow section-like basic body is filled with aluminium foam.

12. Crawler web according to any of the preceding claims, **characterised in that** holding means are provided in the region of the connecting web for fastening the crawler web.

13. Crawler web according to claim 12, **characterised in that** the holding means comprise a threaded strip (4) inserted in the basic body, corresponding openings (11) for introducing a screw thread (13) being provided in the connecting web.

14. Crawler web according to claim 12, **characterised in that** the holding means comprise threaded bores in the connecting web (7).

15. Crawler web according to any of claims 8 to 13, **characterised in that** the mounting for the cutting edge (21) is simultaneously used as a holding means for the crawler web.

## Revendications

1. Crampon (1) pour des chenilles de véhicules à chenilles, en particulier pour des véhicules ou appareils pour la préparation ou la réfection de pistes de ski, qui peut être fixé transversalement à la direction de marche à des bandes s'étendant parallèlement les unes aux autres et orientées dans la direction de marche et comporte une lame (3, 18, 21) ainsi qu'un corps de base allongé (2) qui présente, en direction des bandes, un récepteur plan et comporte en coupe transversale deux branches latérales (5, 6) avec une âme de liaison (7) agencée entre elles, au moins une branche latérale s'approchant de l'autre de sorte que, entre les branches, la lame (3, 18, 21) peut être montée,
**caractérisé en ce que** la lame (3, 18, 21) s'étend de façon continue jusqu'à l'âme de liaison (7).

2. Crampon selon la revendication 1,
**caractérisé en ce que** seulement une âme de liaison unique (7) est prévue qui sert simultanément comme récepteur plan sur les bandes de la chenille.

3. Crampon selon la revendication 1 ou 2,
**caractérisé en ce que** la branche latérale après l'approche se convertit en un tronçon (8, 9) dans lequel la branche s'étend à distance généralement parallèlement par rapport à l'autre branche de sorte que, entre les branches, une lame peut être mise en place.

4. Crampon selon la revendication 3,
**caractérisé en ce que** le tronçon (8, 9), s'étendant à chaque fois à distance parallèlement, des branches latérales (5, 6) est orienté généralement perpendiculairement à l'âme de liaison (7).

5. Crampon selon la revendication 3 ou 4,
**caractérisé en ce que** les deux branches latérales (5, 6), via au moins un coude, se convertissent en un tronçon (8, 9) généralement perpendiculaire à l'âme de liaison et, dans cette zone, s'étendent à distance parallèlement l'une de l'autre de sorte que, entre les branches, une lame (3, 18, 21) peut être mise en place.

6. Crampon selon la revendication 3 ou 4,
**caractérisé en ce que**, dans la zone de l'âme de liaison (7), les branches latérales (5, 6) sont agencées sous forme de U en section transversale et au moins une branche latérale est guidée vers l'intérieur via un premier coude et, via un second coude, se convertit en un tronçon (8, 9) généralement perpendiculaire par rapport à l'âme de liaison et, dans cette zone, s'étend à distance parallèlement à l'autre branche de sorte que, entre les branches, une lame (3, 18, 21) peut être mise en place.

7. Crampon selon une des revendications 3 à 6,
**caractérisé en ce que** la lame (3, 18, 21) est montée de façon rigide dans la zone des tronçons s'étendant parallèlement par rivetage, martelage, soudage, vissage et/ou collage.

8. Crampon selon une des revendications 2 à 7,
**caractérisé en ce que** la lame (18, 21) est fixée dans la zone de l'âme de liaison (7) par l'intermédiaire d'un support.

9. Crampon selon la revendication 8,
**caractérisé en ce que** le support est réalisé par une rainure longitudinale (19) dans l'âme de liaison (7) dans laquelle la lame (18) est guidée au moins partiellement.

10. Crampon selon une des revendications 8 ou 9,
**caractérisé en ce que** le support est réalisé par une liaison à vis (12, 13), qui est agencée dans la zone de l'âme de liaison (7) dans un tronçon (22) prévu à cet effet de la lame (21).

11. Crampon selon une des revendications précédentes,
**caractérisé en ce que** le corps de base du type profilé creux est rempli de mousse d'aluminium.

12. Crampon selon une des revendications précédentes,
**caractérisé en ce que**, dans la zone de l'âme de liaison, des moyens de maintien pour la fixation du crampon sont prévus.

13. Crampon selon la revendication 12,
**caractérisé en ce que** les moyens de maintien comportent une barrette filetée (4) montée dans le corps de base, des ouvertures correspondantes (11) pour introduire un filet de vis (13) étant prévues dans l'âme de liaison.

14. Crampon selon la revendication 12,
**caractérisé en ce que** les moyens de maintien comportent des perçages taraudés dans l'âme de liaison (7).

15. Crampon selon une des revendications 8 à 13,
**caractérisé en ce que** le support pour la lame (21) sert simultanément comme moyen de maintien pour le crampon.
